# EUROPEAN PATENT APPLICATION

(11) **EP 2 822 003 A1**
(43) Date of publication of application: **07.01.2015**
(21) Application number: 14173515.9
(22) Date of filing: 23.06.2014
(51) Int. Cl.: H01F 1/059, H01F 41/02, H01F 1/08

(54) **Magnet manufacturing method and magnet**

(30) Priority: 25.06.2013 JP 2013132540; 25.06.2013 JP 2013132541
(71) Applicant: JTEKT CORPORATION, Osaka-shi Osaka 542-8502 (JP)
(72) Inventor: Mio, Takumi, Osaka-shi, Osaka 542-8502 (JP); Nishi, Koji, Osaka-shi, Osaka 542-8502 (JP); Baba, Toshiyuki, Osaka-shi, Osaka 542-8502 (JP)
(74) Representative: Winter, Brandl, Fürniss, Hübner, Röss, Kaiser, Polte - Partnerschaft mbB

(57) **Abstract**

There is provided a magnet manufacturing method with which a high residual magnetic flux density is obtained without using dysprosium (Dy) and without using a bonding agent. Magnetic powders (10) made of a hard magnetic material formed of a R-Fe-N compound containing a rare earth element as R or formed of a Fe-N compound are used. In a pressurizing step (S2), the magnetic powders (10) are pressurized by molds (2, 3) multiple times to form a primary compact (100). In a baking step (S3), a secondary compact (200) is formed by heating the primary compact (100) in an oxidizing atmosphere at a temperature lower than a decomposition temperature (Te2) of the magnetic powders (10) to bond together the outer surfaces of the adjacent magnetic powders (10) with oxide films formed on the outer surfaces of the magnetic powders (10).

## Description

### BACKGROUND OF THE INVENTION

### 1. Field of the Invention

The invention relates to a magnet manufacturing method and a magnet.

### 2. Description of the Related Art

Japanese Patent Application Publication No. 2007-39794 (JP 2007-39794 A) describes a magnet containing a Nd-Fe-B alloy and a magnet containing a Sm-Fe-N alloy, as examples of conventional rare-earth magnets. JP 2007-39794 A also describes a magnet manufacturing method in which a soft magnetic metal is mixed into the above-described alloy, and the mixture is subjected to pressure-forming and then sintered.

Japanese Patent Application Publication No. 2012-69962 (JP 2012-69962 A) describes a magnet manufacturing method in which a R-Fe-N-H magnetic material and soft magnetic powders are mixed with each other, the mixture is subjected to powder compacting and then solidified through shock-pressurization with the use of underwater shock waves, and the residue temperature after shock-pressurization is restricted to a value equal to or lower than the decomposition temperature of the magnetic material. The thus manufactured magnet does not contain any binder such as resin.

Japanese Patent Application Publication No. 2005-223263 (JP 2005-223263 A) describes a rare-earth permanent magnet manufacturing method in which oxide films are formed on Sm-Fe-N compound powders, the Sm-Fe-N compound powders with oxide films are subjected to pre-pressurization-molding to be formed into a prescribed shape in a non-oxidizing atmosphere, and then the thus molded compact is consolidated at a temperature within a range from 350 to 500 deg C in a non-oxidizing atmosphere to manufacture a rare-earth permanent magnet. As described above, it is deemed that a Sm-Fe-N magnet can be manufactured at a temperature lower than the decomposition temperature of the Sm-Fe-N compound.

Japanese Patent Application Publication No. 62-206801 (JP 62-206801 A) describes a magnet manufacturing method in which stearic acid is mixed into alloy powders to cover powder particles with the stearic acid, and the powder particles covered with the stearic acid are subjected to pressurization-molding and then sintered.

In the magnet manufacturing methods described in JP 2007-39794 A and JP 62-206801 A, it is necessary to use dysprosium (Dy), which is expensive and rare, to manufacture a magnet containing the Nd-Fe-B alloy. When the Sm-Fe-N alloy is used, because the decomposition temperature of the Sm-Fe-N alloy is low, it is difficult to subject the Sm-Fe-N alloy to sintering. If the Sm-Fe-N alloy is sintered, the temperature of the Sm-Fe-N alloy becomes equal to or higher than the decomposition temperature and the alloy is decomposed. This may cause a possibility that the magnet will not be able to exhibit its performance as a magnet. Thus, usually, alloy powders are bonded by a bonding agent such as resin to manufacture the Sm-Fe-N magnet. However, using the bonding agent such as resin causes a decrease in the density of the alloy powders of the magnet, which may be a factor of a decrease in the residual magnetic flux density.

In the magnet manufacturing methods described in JP 2012-69962 A and JP 2005-223263 A, because magnetic powders are not sintered, clearances are left between the powders in a molded magnet. That is, the magnetic powders have a density that is lower than that when the magnetic powders are sintered. As a result, the residual magnetic flux density is lower than that when the magnetic powders are sintered.

### SUMMARY OF THE INVENTION

The invention is made in light of the above-described circumstances, and one object of the invention to provide a magnet manufacturing method with which a high residual magnetic flux density is obtained, without using dysprosium (Dy) and without using a bonding agent, and a magnet.

A magnet manufacturing method according to an aspect of the invention includes: forming a primary compact by pressurizing magnetic powders made of a hard magnetic material formed of a R-Fe-N compound that contains a rare earth element as R or formed of a Fe-N compound, multiple times by a mold; and carrying out baking to form a secondary compact by heating the primary compact at a temperature lower than a decomposition temperature of the magnetic powders to bond together outer surfaces of the magnetic powders that are adjacent to each other.

With the magnet manufacturing method according to the above aspect, the R-Fe-N compound or the Fe-N compound is used as the magnetic powders made of the hard magnetic material. Thus, it is no longer necessary to use dysprosium (Dy). As a result, the magnet is manufactured at low costs. During baking in the magnet manufacturing method, the secondary compact is formed by bonding together the outer surfaces of the adjacent magnetic powders by baking instead of sintering. That is, in the secondary compact, the clearances formed in the primary compact remain.

The magnetic powders are re-arranged with respect to the arrangement of the magnetic powders during the immediately preceding pressurization, by pressurizing the magnetic powders by the mold multiple times during the pressurizing. By pressurizing the magnetic powders multiple times, the clearances between the magnetic powders in the primary compact become smaller than those when the magnetic powders are pressurized only once. Thus, the regions where the magnetic powders are not present in the primary compact are reduced, and thus the residual magnetic flux density of the secondary compact after baking is enhanced.

### BRIEF DESCRIPTION OF THE DRAWINGS

The foregoing and further features and advantages of the invention will become apparent from the following description of example embodiments with reference to the accompanying drawings, wherein like numerals are used to represent like elements and wherein:
FIG. 1 is a flowchart illustrating a magnet manufacturing method according to an embodiment of the invention;
FIG. 2A is a view illustrating the initial state of a mixing step in FIG. 1;
FIG. 2B is a view illustrating the state at the completion of the mixing step in FIG. 1;
FIG. 3A is a view illustrating the initial state of a pressurizing step in FIG. 1;
FIG. 3B is a view illustrating the intermediate state of the pressurizing step in FIG. 1;
FIG. 3C is a view illustrating the state at the completion of the pressurizing step in FIG. 1;
FIG. 4 is a schematic view of the structural section of a primary compact at the completion of the pressurizing step;
FIG. 5 is a schematic view of the structural section of a secondary compact at the compression of a baking step in FIG. 1;
FIG. 6 is a schematic view of the structural section of a tertiary compact at the completion of a coating step in FIG. 1;
FIG. 7 is a process chart of a heating process in the baking step in FIG. 1;
FIG. 8 is a graph indicating the relationship between the number of times of pressurization in the pressurizing step and the density ratio of the primary compact; and
FIG. 9 is a table indicating the density ratios of the primary compact achieved by changing the number of times of pressurization and presence or absence of heating in the pressurizing step.

### DETAILED DESCRIPTION OF EMBODIMENTS

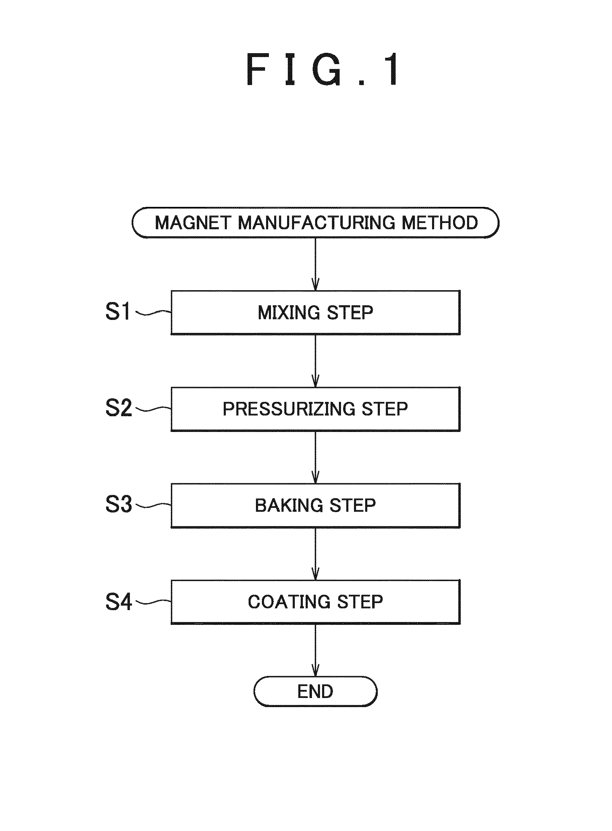

Hereinafter, a magnet manufacturing method according to an embodiment of the invention will be described with reference to FIG. 1 to FIG. 7. Magnetic powders 10, which are made of a hard magnetic material used as a material of a magnet, and lubricant 60, which is in a powdery state at ordinary temperature, are prepared. In the present embodiment, any bonding agent such as resin, which is conventionally used, is not used.

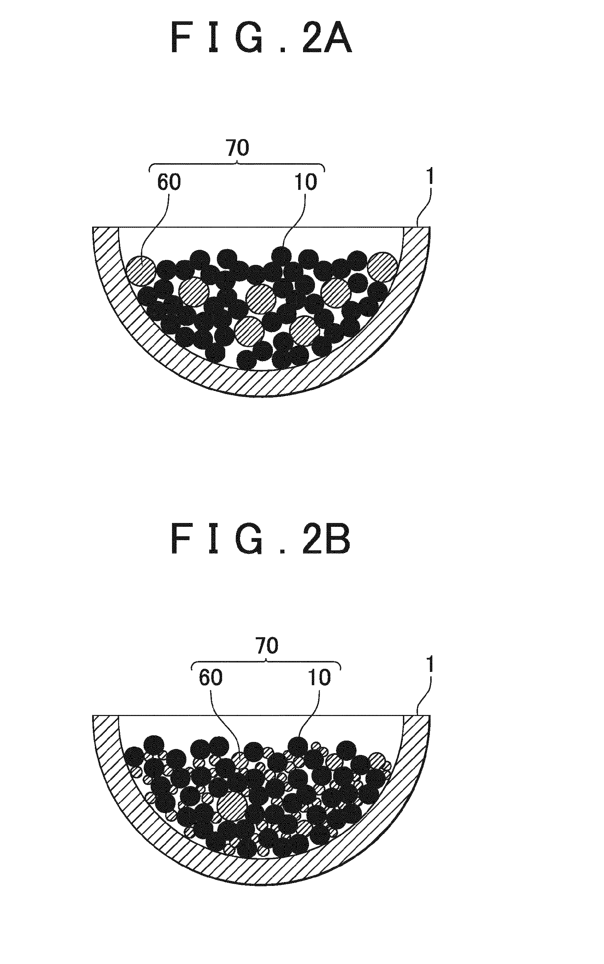

As illustrated in FIG. 1 and FIG. 2A, the magnetic powders 10 and the lubricant 60, which are prepared as described above, are placed in a mixing bowl 1 such as a mortar, and are mixed to produce a powder mix 70 (step S1 in FIG. 1).

As the magnetic powders 10, a R-Fe-Ne compound that contains a rare earth element as R, or a Fe-N compound is used. Rare earth elements other than dysprosium, such as light rare earth elements, are preferably used as the rare earth element R. Among light rare earth elements, Sm is particularly preferable. Note that, in this specification, the light rare earth elements are lanthanoid elements having an atomic weight smaller than that of Gd, namely, La, Ce, Pr, Nd, Pm, Sm, Eu. Specifically, Sm₂Fe₁₇N₃ or Fe₁₆N₂ is preferably used as the magnetic powders 10. The average particle diameter of the magnetic powders 10 is approximately 2 to 5 µm. Because hard magnetic material that does not require dysprosium is used, the magnet is manufactured at low costs. Further, as the magnetic powders 10, magnetic powders with oxide films formed partially on their surfaces are used.

As the lubricant 60, metallic soap powders are used. For example, the stearic acid metal powders such as zinc stearate powders are used as the lubricant 60. The average particle diameter of the lubricant 60 is approximately 10 µm. That is, the average particle diameter of the lubricant 60 is larger than that of the magnetic powders 10. The lubricant 60 has a specific weight that is smaller than that of the magnetic powders 10. Thus, by setting the average particle diameter of the lubricant 60 in the initial state to a relatively large value, the mass of one particle of the lubricant 60 is made larger. Thus, it is possible to restrain the lubricant 60 from scattering in the air during mixing of the lubricant 60 and the magnetic powders 10.

The volume ratio between the magnetic powders 10 and the lubricant 60 is set such that the magnetic powders 10 have 80 to 90 volume percent and the lubricant 60 has 5 to 15 volume percent with an additive as the remainder. The magnetic powders 10 and the lubricant 60 are mixed with each other while being ground in the mixing bowl 1. Because the magnetic powders 10 and the lubricant 60 are ground while being mixed with each other, the lubricant 60 having a low bond strength is fragmented, as illustrated in FIG. 2B, and thus the particle diameter of the lubricant 60 is reduced as a whole. Thus, the lubricant 60 having different particle diameters is present after a mixing step is completed.

At the completion of the mixing step, in the powder mix 70, the amount of massive part formed only of the magnetic powders 10 is reduced and the size of the lubricant 60 is also reduced. That is, the finely fragmented lubricant 60 is present in the vicinity of each of the magnetic powders 10.

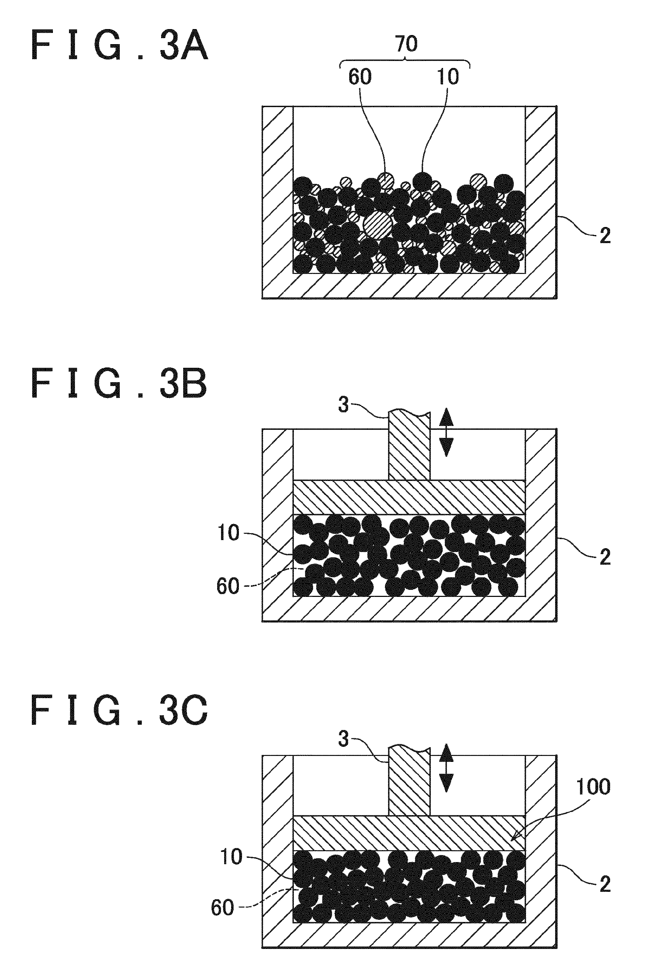

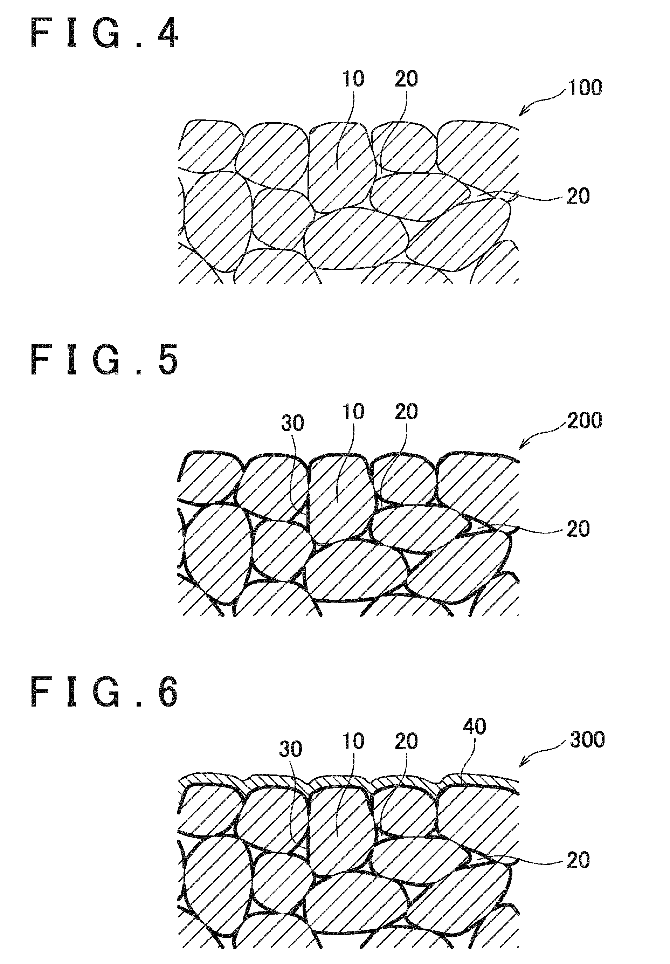

Next, as indicated in step S2 in FIG. 1, the powder mix 70 is pressurized to form a primary compact 100 as illustrated in FIG. 3C and FIG. 4 (pressurizing step). The pressurizing step will be described in detail with reference FIG. 3A to FIG. 3C.

At first, as illustrated in FIG. 3A, the powder mix 70 formed of the magnetic powders 10 and the lubricant 60 in a powdery state is placed in a mold 2. Then, by moving a mold 3 (upper mold) as illustrated in FIG. 3B, the powder mix 70 is pressurized by the molds 2, 3. At this time, the pressure applied by the molds 2, 3 is 1 to 2 GPa.

Pressurization by the molds 2, 3 is repeated 2 to 30 times. Specifically, after the application of a pressure to the mold 3, the pressure applied to the mold 3 is once released, and then, a pressure is again applied to the mold 3. This process is repeated. When the pressure applied to the mold 3 is released, the mold 3 may be moved upward or the pressure may be just lowered without moving the mold 3 upward.

In the pressurizing step, the molds 2, 3 are heated by a heater (not illustrated) or the like, for example, from their external surfaces to heat the powder mix 70 in the molds 2, 3. At this time, the heating temperature of the powder mix 70 is set to a temperature (first temperature) that is lower than a decomposition temperature Te2 of the magnetic powders 10 but is equal to or higher than a melting point of the lubricant 60. Thus, the magnetic powders 10 are not decomposed. The lubricant 60 that is in a solid state (powdery state) at normal temperature is turned into liquid because the lubricant 60 is heated up to a temperature equal to or higher than its melting point during the pressurizing step.

Thus, during the pressurization of the magnetic powders 10 in the powder mix 70, the lubricant 60 is not solid but liquid having a viscosity corresponding to the temperature. It is needless to say that the higher the heating temperature (the first temperature) is, the lower the viscosity of the lubricant 60 is. The lubricant 60 that is turned into liquid uniformly sticks to the external surfaces of the magnetic powders 10 without segregation. The shape of the lubricant 60 is not illustrated in FIG. 3B.

With the repetitions of the pressurization, as illustrated in FIG. 3C, clearances between the magnetic powders 10 are gradually reduced and then the primary compact 100 in which the clearances between the magnetic powders 10 are small is formed. This is because the magnetic powders 10 are re-arranged with respect to the arrangement of the magnetic powders 10 during the immediately preceding pressurization, due to pressurization carried out multiple times. In the molds 2, 3, because the lubricant 60 in the liquid form is present between the adjacent magnetic powders 10, the magnetic powders 10 are able to move relative to each other considerably smoothly. Due to the synergistic effect between the re-arrangement of the magnetic powders 10 and the slipping effect provided by the lubricant 60, the clearances between the magnetic powders 10 in the primary compact 100 become smaller.

Next, as indicated in step S3 in FIG. 1, the primary compact 100 formed in the pressurizing step is heated in an oxidizing atmosphere to form a secondary compact 200 (baking step). FIG. 4 is a schematic view of the structural section of the primary compact 100 before the baking step. As illustrated in FIG. 4, clearances 20 are present between the magnetic powders 10. FIG. 5 is a schematic view of the structural section of the secondary compact 200 after the heating.

Because the primary compact 100 is heated in the oxidizing atmosphere, the exposed surfaces of the magnetic powders 10 react chemically with oxygen to create oxide films 30 (indicated by the bold lines in FIG. 5) on the outer surfaces of the magnetic powders 10. The oxide films 30 bond the outer surfaces of the adjacent magnetic powders 10 to each other. That is, the oxide films 30 are formed on the outer surfaces of the magnetic powders 10 only at portion exposed to the clearances 20, and portions of the outer surfaces of the magnetic powders 10, which are not exposed to the clearances 20, serve as base materials. Thus, the oxide films 30 are not formed over the entire outer surfaces of the magnetic powders 10.

The thus formed secondary compact 200 has a sufficient strength. Thus, it is possible to enhance the bending strength of the secondary compact 200. Further, by reducing the region where no magnetic powders 10 are present in the primary compact 100 in the pressurizing step, the residual magnetic flux density of the secondary compact 200 after the baking step is increased. Note that the secondary compact 200 has a density of approximately 5 to 6 g/cm³.

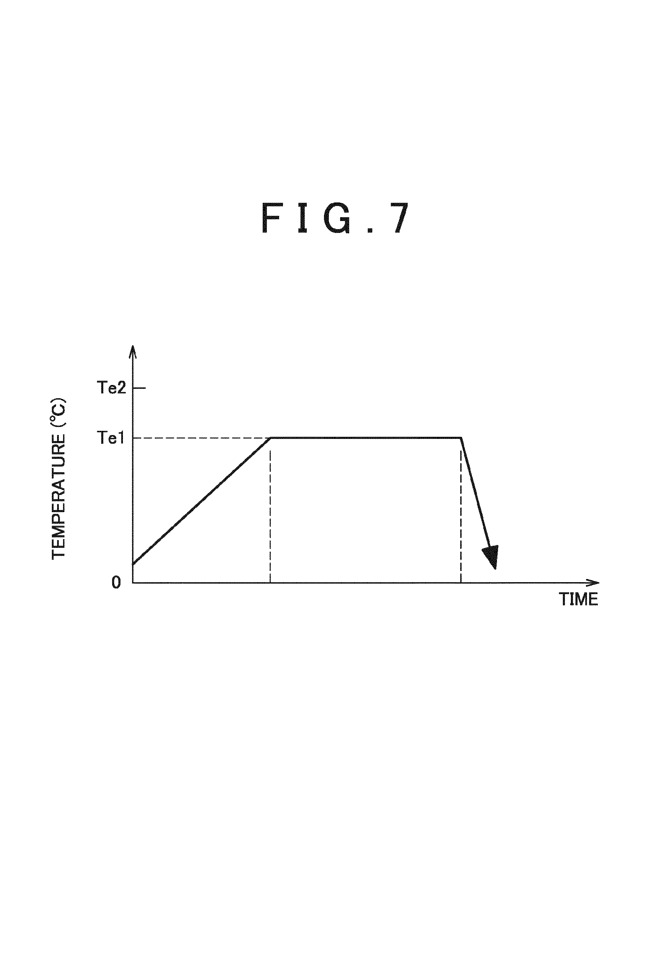

The baking step is carried out with the primary compact 100 placed in a heating furnace in which heating is carried out using microwaves, an electric furnace, a plasma furnace, a high frequency heating furnace, a heating furnace in which heating is carried out using an infrared heater or the like. The temperature profile of the heating during the baking step is as illustrated in FIG. 7.

As illustrated in FIG. 7, a heating temperature Te1 (second temperature) is set lower than the decomposition temperature Te2 of the compound of the magnetic powders 10. For example, when Sm₂Fe₁₇N₃ or Fe₁₆N₂ is used as the magnetic powders 10, the decomposition temperature Te2 is approximately 500 deg C, and thus the heating temperature Te1 is set lower than 500 deg C. For example, the heating temperature in the baking step is set to a value within a range from approximately 200 to 300 deg C.

The oxygen concentration and the pressure of the oxidizing atmosphere are not particularly limited as long as the magnetic powders 10 are oxidized, and may be about the oxygen concentration in the atmospheric air and the atmospheric pressure, respectively. Thus, it is not necessary to specially control the oxygen concentration and the pressure. Thus, the heating may be carried out in the atmosphere. By setting the heating temperature Te1 (second temperature) to a value within a range from approximately 200 to 300 deg C, the oxide films 30 are formed regardless of whether Sm₂Fe₁₇N₃ or Fe₁₆N₂ is used as the magnetic powders 10.

Next, as indicated in step S4 in FIG. 1 and as illustrated in FIG. 6, the surface of the secondary compact 200 formed in the baking step is covered with a coating film 40 to form a tertiary compact 300 (coating step).

The coating film 40 formed on the tertiary compact 300 is a plating film that is formed of a material such as Cr, Zn, Ni, Ag or Cu by electroplating or a plating film that is formed by electroless plating. Examples of electroless plating include electroless plating formed of Ni, Au, Ag, Cu, Sn, Co or an alloy or a mixture of these metals. Alternatively, the coating film 40 may be a resin film formed by resin coating, a glass film formed by glass coating or a film made of Ti, diamond-like carbon (DLC) or the like. Examples of resin coating include silicon resin coating, fluororesin coating, and urethane resin coating.

That is, the coating film 40 formed on the tertiary compact 300 functions like an eggshell. Because both the oxide films 30 and the coating film 40 exhibit a bond strength, the bending strength of the tertiary compact 300 is enhanced. In particular, application of the electroless plating enhances the surface hardness and the adherence of the coating film 40, and thus the bond strength of the magnetic powders 10 is further enhanced. For example, nickel-phosphorus electroless plating exhibits a satisfactory corrosion resistance.

Further, as described above, the oxide films 30 bond the magnetic powders 10 to each other not only at the outer surface of the secondary compact 200 but also in the inside of the secondary compact 200. Thus, the bond strength provided by the oxide films 30 restricts free movement and rotation of the magnetic powders 10 inside the tertiary compact 300. Thus, the adjacent magnetic powders 10 are restrained from being arranged such that their magnetic poles are reversed to each other due to the rotation of the magnetic powders 10. Thus, it is possible to restrict a reduction in the residual magnetic flux density of the entirety of the tertiary compact 300. As a result, it is possible to obtain a magnet having a high residual magnetic flux density.

When the electroplating is applied in the coating step, the bond strength of the secondary compact 200 needs to be increased because the secondary compact 200 before the plating serves as an electrode. On the other hand, when the electroless plating, the resin coating or the glass coating is applied in the coating step, it is not necessary to set the bond strength of the secondary compact 200 as high as that in the case of the electroplating. That is, the bond strength provided by the oxide films 30 is sufficient. Thus, the coating film 40 is reliably formed on the outer surface of the secondary compact 200 in the coating step in which the above-described electroless plating, resin coating or glass coating is applied.

When the electroless plating is applied in the coating step, the secondary compact 200 is immersed in a plating solution. At this time, the plating solution attempts to enter the inside of the secondary compact 200, but the oxide films 30 that are formed in the secondary compact 200 exhibit a function restricting the entry of the plating solution into the secondary compact 200. Thus, it is expected that the oxide films 30 will restrict occurrence of corrosion or the like caused by the entry of the plating solution into the secondary compact 200.

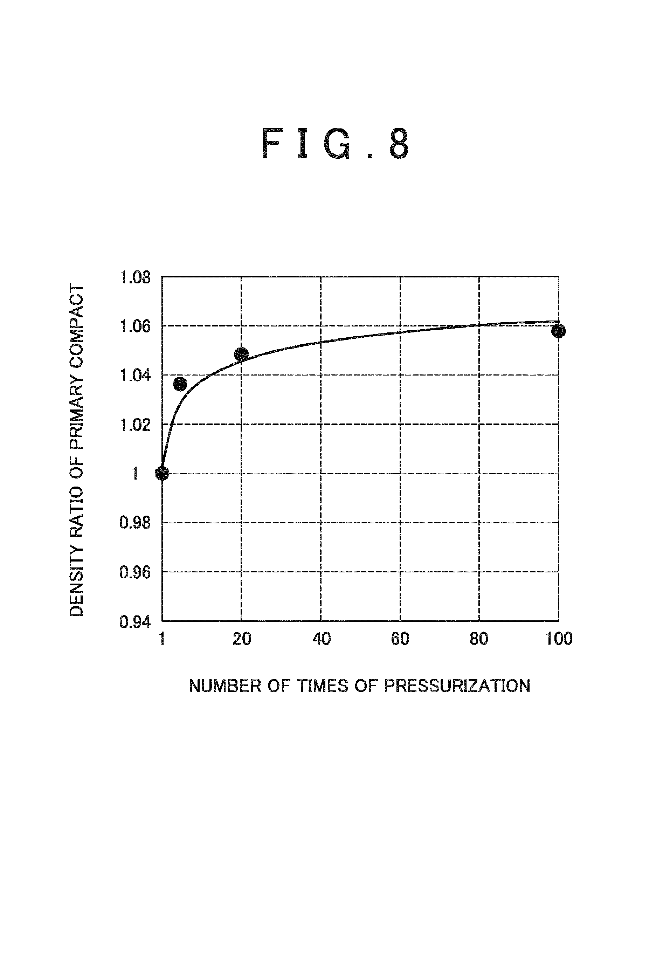

As described above, the powder mix 70 is repeatedly pressurized by the molds 2, 3 multiple times in the pressurizing step. The relationship between the number of times of pressurization and the density ratio of the primary compact 100, which varies as the number of times of pressurization is changed, will be described with reference to FIG. 8. In this case, no heating at the first temperature was carried out in the pressurizing step in order to clarify the relationship between the number of times of pressurization and the density ratio.

FIG. 8 is a graph obtained by plotting density ratios when the number of times of pressurization was successively set to 2, 20 and 100 in the case where the density ratio of the primary compact 100, which is obtained when the number of times of pressurization is 1, was set to 1. In FIG. 8, a curve indicated by a quadratic expression that approximates the plotting is also illustrated.

As illustrated in FIG. 8, by setting the number of times of pressurization to 2, the clearances 20 between the magnetic powders 10 became smaller than that when the number of times of pressurization is 1, and thus the density ratio of the primary compact 100 was considerably increased. Even when the pressurization is carried out more than 30 times, the clearances 20 between the magnetic powders 10 remained nearly-unchanged. Thus, by setting the number of times of pressurization to a value within a range from 2 to 30, a magnet having a high residual magnetic flux density is reliably obtained while an increase in the man-hours for manufacturing the magnet is prevented. Although the evaluation was made on the primary compact 100 on which the coating film 40 was formed, it is obvious that the relationship described above is obtained on the secondary compact 200 and the tertiary compact 300.

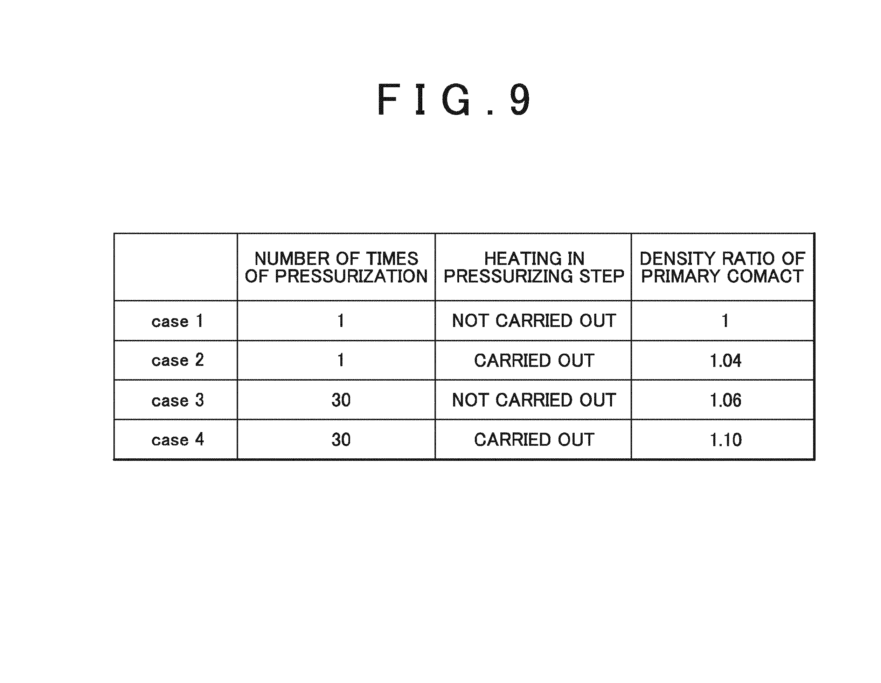

Next, the density of the primary compact 100 was examined in each of the case where the number of times of pressurization in the pressurizing step was 1 and heating at the first temperature in the pressurizing step was not carried out, the case where the number of times of pressurization in the pressurizing step was 1 and heating at the first temperature in the pressurizing step was carried out, the case where the number of times of pressurization in the pressurizing step was 30 and heating at the first temperature in the pressurizing step was not carried out, and the case where the number of times of pressurization in the pressurizing step was 30 and heating at the first temperature in the pressurizing step was carried out. There are 4 manufacturing conditions obtained by combining the numbers of times of pressurization and presence or absence of heating in the pressurizing step, that is, cases 1 to 4 indicated in FIG. 9.

In the cases 1 to 4, the density ratios of the primary compact 100 were as illustrated in FIG. 9. The density ratio of the primary compact 100 obtained when the number of times of pressurization was 1 and heating in the pressurizing step was not carried out was set to 1. In the case 2, the density ratio of the primary compact 100 was increased by carrying out the heating even though the number of times of pressurization was 1.

In view of the relationship between the case 1 and the case 3, and the relationship between the case 2 and the case 4, the rates of increase in the density ratio of the primary compact 100 achieved by changing the number of times of pressurization from 1 to 30 were substantially the same. That is, as understood from the case 4, by setting the number of times of pressurization to 30 and carrying out the heating in the pressurizing step, the effects due to an increase in the number of times of pressurization and the heating were exhibited. As a result, the density of the primary compact 100 was increased.

In the above-described embodiment, the heating of the powder mix 70 in the pressurizing step was carried out by heating the molds 2. 3. Alternatively, the powder mix 70 may be heated up to the first temperature just before the powder mix 70 is placed in the mold 2.

In the above-described embodiment, the lubricant 60 that is in a solid state (powdery state) at normal temperature is used. Alternatively, the lubricant 60 that is liquid at normal temperature may be used. Even in this case, in the mixing step, the liquid lubricant 60 and the magnetic powders 10 may be mixed with each other. By carrying out the heating in the pressurizing step, the viscosity of the lubricant 60 is lowered. Thus, the lubricant 60 is uniformly applied over the outer surfaces of the magnetic powders 10. As a result, the magnetic powders 10 smoothly move relative to each other. Thus, it is possible to increase the density of the primary compact 100.

## Claims

1. A magnet manufacturing method comprising:
forming a primary compact by pressurizing magnetic powders made of a hard magnetic material formed of a R-Fe-N compound that contains a rare earth element as R or formed of a Fe-N compound, pressurizing multiple times by a mold; and
carrying out baking to form a secondary compact by heating the primary compact at a temperature lower than a decomposition temperature of the magnetic powders to bond together outer surfaces of the magnetic powders that are adjacent to each other.

2. The magnet manufacturing method according to claim 1, wherein, during the baking, the secondary compact is formed by heating the primary compact in an oxidizing atmosphere to bond together the outer surfaces of the magnetic powders with oxide films formed on the outer surfaces of the magnetic powders.

3. The magnet manufacturing method according to claim 1 or 2, wherein the pressurizing is repeated 2 to 30 times.

4. The magnet manufacturing method according to claim 2, wherein:
during the pressurizing, the primary compact is formed by pressurizing the magnetic powders by the mold while the magnetic powders and a lubricant placed in the mold are heated at a first temperature that is lower than the decomposition temperature of the magnetic powders and equal to or higher than a melting point of the lubricant; and
during the baking, the secondary compact is formed by heating the primary compact at a second temperature that is lower than the decomposition temperature of the magnetic powders to bond together the outer surfaces of the magnetic powders adjacent to each other.

5. The magnet manufacturing method according to claim 4, further comprising mixing the magnetic powders and the lubricant in a powdery state with each other to prepare a powder mix, wherein
during the pressurizing, the primary compact is formed by pressurizing the powder mix placed in the mold while heating the powder mix at the first temperature.

6. A magnet manufactured by the magnet manufacturing method according to any of claims 1 to 5.
